# FASCICULE DE BREVET EUROPEEN

(11) **EP 3 469 291 B1**
(45) Date de publication et mention de la délivrance du brevet: **21.10.2020**
(21) Numéro de dépôt: 17735204.4
(22) Date de dépôt: 09.06.2017
(51) Int. Cl.: F28D 20/02

(54) **DISPOSITIF DE POSITIONNEMENT DANS UN VOLUME**
POSITIONIERVORRICHTUNG IN EINEM VOLUMEN
POSITIONING DEVICE IN A VOLUME

(30) Priorité: 10.06.2016 FR 1655391
(43) Date de publication de la demande: 17.04.2019
(73) Titulaire: Hutchinson, 75008 Paris (FR)
(72) Inventeur: CHOPARD, Fabrice, 38400 Saint Martin d'Heres (FR); CHAUVET, Boris, 45210 Ferrieres (FR); LEBORGNE, Mathieu, 74500 Évian-les-Bains (FR)
(74) Mandataire: Ernest Gutmann - Yves Plasseraud S.A.S.
(86) Numéro de dépôt international: PCT/FR2017/051486
(87) Numéro de publication internationale: WO 2017/212202

(56) Documents cités:
- EP-A1- 2 727 646
- WO-A1-2015/164628
- WO-A1-2016/016428

## Description

La présente invention concerne le domaine de la gestion thermique. Est concerné en particulier un ensemble de gestion thermique pour la circulation et l'échange thermique avec un fluide correspondant au préambule de la revendication 1, et tel que divulgué par le document WO2015/164628.

Dans un volume, il arrive qu'un fluide qui y circule soit à un moment porteur d'une d'énergie thermique qui, si on la stocke alors, pourra être restituée plus tard, dans ce volume, par exemple au même fluide qui pourra alors avoir à y circuler à une autre température, et donc pouvoir y bénéficier de cette restitution (au moins partielle) d'énergie thermique.

Ainsi, par exemple, dans un véhicule automobile, l'huile moteur est très chaude quand le moteur propulsif fonctionne depuis un moment. Il peut alors être utile de stocker une partie de cette énergie thermique. Par contre, lors d'un démarrage à froid du moteur, réchauffer l'huile moteur serait utile pour la performance du moteur et limiter les rejets polluants.

Outre la manière de procéder pour stocker puis restituer plus tard une énergie thermique, un problème se pose aussi pour assurer cette fonction au mieux tout en trouvant un compromis entre un écoulement du fluide dans le volume concerné et le couple temps de séjour/performance des échanges thermiques dans le volume.

Aussi est-il proposé un ensemble de gestion thermique conforme à la revendication 1.

Pour positionner effectivement le corps central en tenant compte de possibles formes environnantes et/ou d'une possible nécessité d'orienter localement le fluide en le canalisant localement, il est proposé que la structure de positionnement comprenne une structure extérieure :
- définissant (sensiblement ou globalement) un cylindre,
- et liée par des bras transversaux au corps central.

Dans certains cas, on pourra se satisfaire d'une structure de positionnement comprenant une structure extérieure définissant un anneau et liée par des bras transversaux au corps central.

Un avantage sera de pouvoir réduire l'intervalle entre deux corps centraux de deux dispositifs adjacents puisque la structure de positionnement ne s'étendra alors que (sensiblement) dans un plan. Hors ce plan, deux dispositifs adjacents pourront se succéder, au contact.

Et pour tenir compte de difficultés de mise en place, stockage ou maintenance, c'est un ensemble comprenant plusieurs dispositifs liés entre eux en chapelet par un lien souple, et notamment avec donc une succession de structures extérieures définissant chacune un anneau, que l'on peut proposer.

Pour un auto-positionnement pouvant être omnidirectionnel, quelle que soit la forme du volume défini par ledit intérieur creux, et une circulation environnante du fluide qui soit aussi indépendante de la position du dispositif dans ce volume, il est proposé que la structure de positionnement se présente comme une structure périphérique s'étendant circonférentiellement autour du corps central, dans plusieurs plans, pour l'écarter d'un appui environnant dans plusieurs directions.

En particulier, la structure de positionnement pourra alors comprendre une structure extérieure :
- définissant une sphère discontinue (présentant des ouvertures de passage et de circulation du fluide),
- et liée par des bras transversaux au corps central.

Si la structure de positionnement d'un diamètre d'environ 2cm est liée à un corps central d'environ 1cm d'un diamètre par une quinzaine de tiges rectilignes ayant une section de dimension filamentaire (donc de l'ordre du mm) et que la sphère discontinue est également réalisée par des tiges rectilignes mais incurvées, on pourra associer solidité, performance énergétique et respect d'une circulation sans excès de perte de charge.

De préférence, le corps central se présentera comme une sphère ou sera profilé. La sphère est omnidirectionnelle.

Dans les réalisations à structures extérieures qui précèdent, ces dernières seront a priori radialement éloignées du corps central. Ceci est typiquement favorable dans un conduit où les bras transversaux assureront juste une liaison mécanique radiale avec le corps central en s'opposant peu à la circulation du fluide.

Dans un volume de stockage tel qu'un ballon échangeur stockeur, où il n'y a pas de formes tubulaires comme dans un conduit, on a compris de ce qui précède que la problématique pourra être plutôt d'écarter entre eux et vis-à-vis de la paroi extérieure lesdits dispositifs, de façon juste suffisante pour ne pas empêcher quasiment toute circulation du fluide, mais en privilégiant le nombre de dispositifs au cm2, afin d'obtenir un maximum d'échange thermique.

Favorablement, chaque corps central pourra se présenter comme une sphère, pour être facile à utiliser et à répartir, avec un minimum d'espace mort.

Quant à la structure de positionnement, elle pourra se présenter, en entourant le corps central, à son contact:
- comme une structure alvéolaire,
- ou comme un ou plusieurs bourrelets linéaires entourant le corps central,
- ou comme des creux formés dans la surface extérieure dudit corps.

De la sorte, d'une part on augmentera la surface d'échange entre le corps et le fluide environnant venant à son contact, et d'autre part on favorisera le passage de ce fluide, suivant le cas entre les bourrelets ou dans les alvéoles, ou dans lesdits creux qui définiront alors des canaux naturels de passage fluide.

Favorablement, le dispositif produit sera un moulage monobloc intégrant la structure de positionnement et le corps central contenant donc le matériau de stockage d'énergie thermique.

Et ce matériau comprendra favorablement au moins un MCP (matériau à changement de phase) permettant une performance énergétique élevée.

A toute fin, il est confirmé qu'un matériau à changement de phase - ou MCP ; PCM en anglais - désigne un matériau capable de changer d'état physique, par exemple entre liquide et solide, dans une plage de température comprise par exemple entre -50°C et 180°C. Le transfert de chaleur (ou transfert thermique) s'opère par utilisation de sa Chaleur Latente (CL) : le matériau peut alors stocker ou céder de l'énergie par simple changement d'état, tout en conservant une température sensiblement constante, celle du changement d'état.

Le(s) matériau(x) thermiquement isolant(s) associé(s) au(x) MCP pourra(ont) être un isolant « simple » comme de la laine de verre, mais on préfèrera certainement une mousse, par exemple de polyuréthane ou de polyisocyanurate, ou encore plus favorablement un matériau thermiquement isolant poreux, voire nano-poreux, tel un aérogel.

Si nécessaire, l'invention sera encore mieux comprise et d'autres caractéristiques, détails et avantages de celle-ci apparaîtront encore à la lecture de la description qui suit, faite à titre d'exemple non limitatif et en référence aux dessins annexés, dans lesquels :
- les figures 1,2,3 schématisent trois premiers exemples où une structure de positionnement assure un centrage axial d'un corps central dans un volume,
- les figures 4,5 schématisent un ensemble de dispositifs selon par exemple la figure 3, en place dans un volume en forme de réceptacle (surtout sur la figure 4, seuls quelques dits dispositifs d'échange thermique et de positionnement ont été représentés et l'on voit les sinuosités que suit le flux que lesdits dispositifs empêchent de s'écouler sensiblement axialement, comme dans un conduit ou un tube ; le temps de séjour est ainsi augmenté par rapport à une disposition dans un conduit), et
- les figures 6,7,8 schématisent (en coupe et en volume) trois autres exemples où une structure de positionnement assure un écartement permettant une circulation de fluide entre les dispositifs illustrés en place dans un volume.

Plusieurs configurations de dispositif 1 d'échange thermique et de positionnement dans un volume appelé aussi intérieur creux, 3 ou 21 d'un réceptacle peuvent donc être imaginées.

Systématiquement, le dispositif 1 comprendra :
- un corps central 5 contenant un matériau 7 de stockage d'énergie thermique par accumulation de chaleur latente, à placer en échange thermique avec un fluide 9 environnant circulant, et
- une structure 11 de positionnement du corps central dans ledit volume, la structure 11 de positionnement étant liée au corps central 5, autour duquel elle s'étend donc, et réservant des passages 13 permettant un contact fluidique entre le corps central 5 et le fluide environnant 9, avec une circulation maintenue dudit fluide.

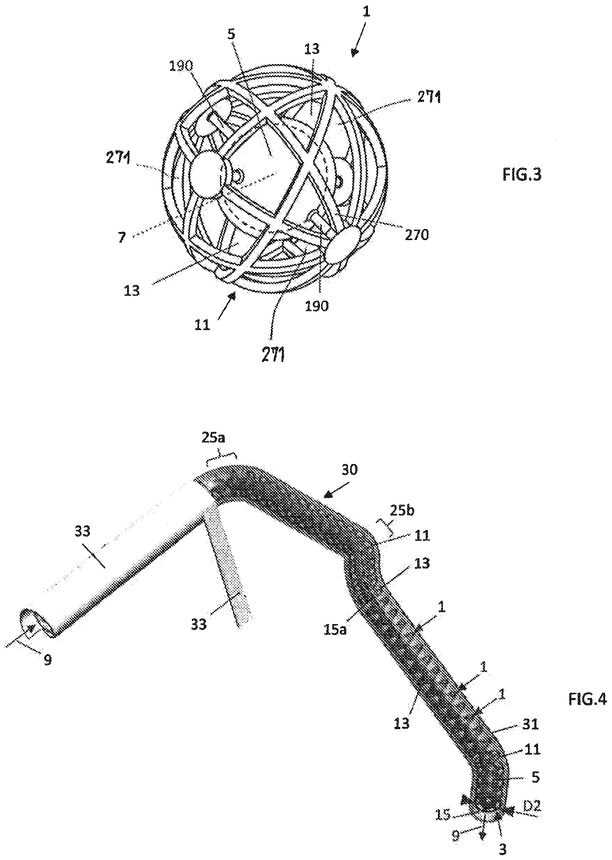

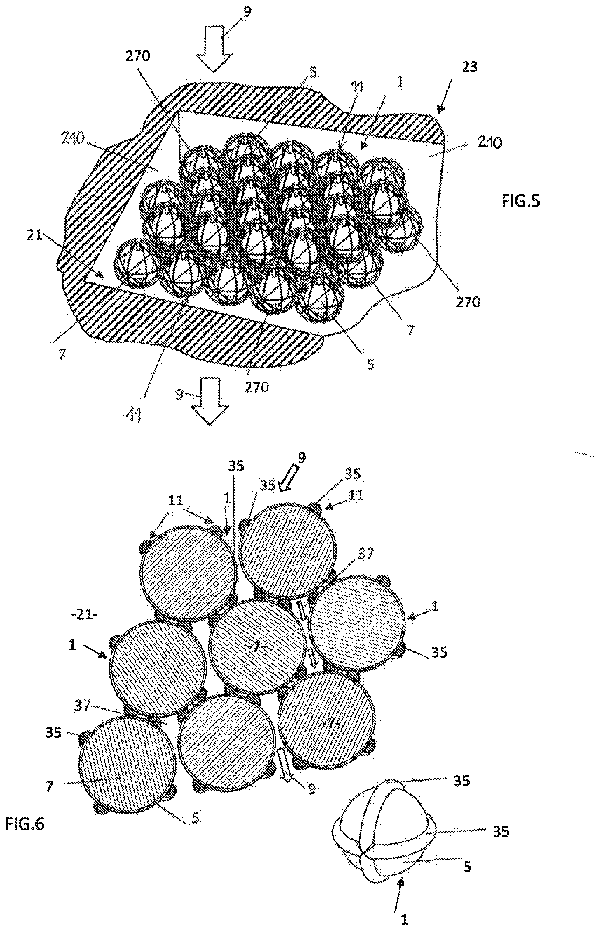

Sur les trois premiers exemples préférés ci-après, la structure 11 de positionnement pourra assurer un centrage axial du corps central 5 dans le volume, dès lors qu'il s'agit d'un positionnement dans un conduit 15, donc dans un moyen tubulaire, mais un placement en vrac comme figures 4,5 est aussi possible. La structure de positionnement 11 réservera les passages 13 entre elle et le corps central 5.

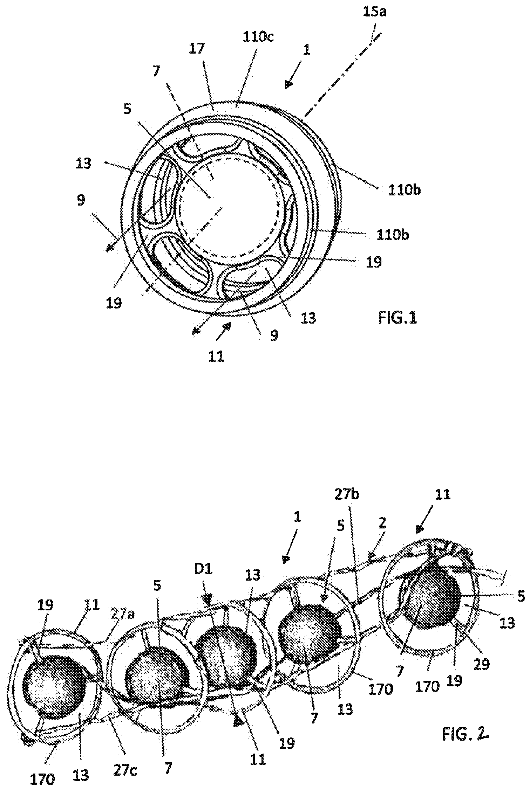

Dans le premier exemple, tel que schématisé figure 1, la structure 11 de positionnement comprend une structure extérieure 17 définissant (sensiblement ou globalement) un cylindre et liée par des bras 19 transversaux au corps central 5.

Avec cette structure extérieure creuse 17 et de fins bras un auto-centrage axial (axe 15a).

Comme dans les réalisations qui suivent, le corps 5 se présente ici comme une sphère. Mais il peut être profilé en obus, pour limiter encore davantage les pertes de charges, avec un volume réservé au matériau 7 qui pourra demeurer identique.

Le cylindre 17 pourra ne pas être plein, mais formé par des branches ou des lignes définissant une telle enveloppe cylindrique, mais avec des passages à travers pour l'alléger.

Dans le deuxième exemple, tel que schématisé figure 2, la structure 11 de positionnement comprend une structure extérieure 170 définissant un anneau et liée de nouveau au corps central 5 par des bras 19 transversaux, ou radiaux.

Dans le troisième exemple, tel que schématisé figure 3, la structure 11 de positionnement comprend une structure périphérique, radialement extérieure, 270 définissant une sphère discontinue et liée par des bras transversaux ou radiaux 190 au corps central 5 contenant la matière 7. La sphère est discontinue en ce qu'elle présente des ouvertures 271 qui traversent sa surface sphérique, de façon que le fluide 9 à faire circuler passe à travers ces ouvertures, et ainsi atteigne le corps central 5. Les ouvertures 271 appartiennent aux passages 13. Comme dans d'autres solutions ici présentées et par exemple illustrées figures 6-8, la solution de la figure 3 permet, avec ses bras transversaux 190 et sa structure périphérique 270 à surface sphérique discontinue, de réaliser une structure 11 de positionnement s'étendant circonférentiellement autour du corps central, dans plusieurs directions et plans, et donc pas uniquement selon un seul diamètre comme cela est le cas dans la solution à anneau 170 de la figure 2, où l'anneau n'écarte le corps 5 que sur une seule circonférence, suivant le plan diamétral dans lequel s'étend l'anneau 170. Un tel auto-positionnement multidirectionnel peut aussi être obtenu avec les solutions des figures 6-8.

Les premier et troisième exemples sont des solutions auto-centrantes dans un conduit, voire dans un volume 3 qui serait formé par l'intérieur creux 21 d'un boîtier 23, comme dans l'exemple des figures 4, 5 où on a représenté une partie d'un tel boîtier stockeur-échangeur présentant une entrée et une sortie pour le fluide 9 et contenant ici une multitude de dispositifs 1 conformes à ceux du troisième exemple. Un fluide 9 arrivant dans ce volume échangera, si la température convient, avec le matériau 7 de stockage d'énergie thermique des corps 5, puis continuera son chemin comme schématisé par les flèches.

Les entrée 22a et sortie 22b respectives de fluide dans l'intérieur creux 21 formeront favorablement des cols vis-à-vis de l'intérieur creux 21 (voir figure 4), à la différence d'un conduit où les sections sont similaires entre les entrée/section intérieure/ sortie.

Dans tous les exemples de réalisation présentée dans cette description, le matériau 7 pourra être constitué par au moins un MCP.

Il pourra par exemple s'agir de MCP encapsulés (typiquement micro-encapsulés) dans une matrice poreuse, à pores ouverts, de préférence de type élastomère, telle qu'à base de silicone, de NBR ou HNBR. Pour chaque corps 5, on pourra prévoir une composition de caoutchouc telle que décrite dans EP2690137 ou dans EP2690141.

Le matériau 7 pourrait aussi être à base de paraffine, d'acide gras eutectique (myristique-caprique) ou de sel hydraté eutectique (chlorure de calcium + potassium). D'autres possibilités existent encore pour chaque corps 5, comme un MCP imprégné dans un réseau poreux.

On notera quoi qu'il en soit que tout MCP peut avoir un changement de phase ou d'état à un pic de température prédéterminé ou qui s'établit sur une plage de températures plus ou moins large. Ainsi, avec un MCP pur (tel qu'une paraffine) la température de changement d'état sera constante, tandis qu'elle pourra être non constante avec plusieurs MCP, tels que pour un mélange de paraffines.

Pour placer ou retirer une série de nombreux dispositifs 1, il est proposé de lier entre eux ces dispositifs 1 disposés en ligne ou chapelet, comme schématisé figure 2, par un lien souple 27 permettant d'orienter depuis l'extérieur du conduit 15 certains au moins des anneaux 170 de façon à les rapprocher d'une position où ces anneaux sont dans un plan radial à l'axe 15a local du conduit.

Le lien souple 27 pourra comprendre trois brins filamentaires passant à travers trois orifices (tel que celui repéré 29) ménagés chacun dans un bras 19, à proximité de l'anneau 170 considéré.

Une sur-longueur des brins filamentaires pourrait permettre de les manœuvrer à distance, un fois le chapelet glissé dans son réceptacle 3/21.

Dans le mode de réalisation de l'ensemble 30 pour la circulation et l'échange thermique avec le fluide 9 illustré figure 4, on remarquera aussi que la paroi pleine 31 qui délimité le volume 31/21 est entourée par un isolant thermique 33 qui va favoriser la gestion thermique à l'endroit de ce conduit, avec les dispositifs 1 disposés dedans.

Dans l'exemple de la figure 5, on a représenté une partie d'un boîtier stockeur-échangeur 23 présentant donc les entrée et sortie respectives 22a,22b précitées, pour le fluide 9, et contenant ici une multitude de dispositifs 1 qui peuvent être conformes à ceux du troisième exemple (figure 3). Un fluide 9 arrivant dans ce volume échangera donc, si la température convient, avec le matériau 7 de stockage d'énergie thermique des corps 5, puis continuera son chemin comme schématisé par les flèches. Chaque structure 11 de positionnement se présente comme une structure périphérique s'étendant circonférentiellement autour du corps central 5, dans plusieurs plans, pour écarter ce corps dans plusieurs directions d'un appui environnant défini ici par les parois 210 de limitation du creux 21.

Trois autres exemples ont été schématisés figures 6,7,8 en particulier tournés vers une mise en place des dispositifs 1 dans un tel intérieur creux 21, ou réceptacle, par exemple celui d'un boîtier.

Dans l'exemple schématisé figure 6, la structure de positionnement 11 de chaque dispositif 1 se présente comme plusieurs bourrelets 35 entourant le corps central 5 contenant le matériau 7 de stockage d'énergie thermique par accumulation de chaleur latente.

Les bourrelets 35 peuvent définir au moins deux bandes qui se croisent pour maintenir par leur intermédiaire un espace libre 37 entre plusieurs dispositifs 1, chacun ayant ici une forme sphérique, afin que, placées dans l'intérieur creux 21, ces formes 1 s'y accumulent en nombre le plus élevé possible, sans perte de place, tout en permettant au fluide 9 de circuler en échange thermique, entre eux.

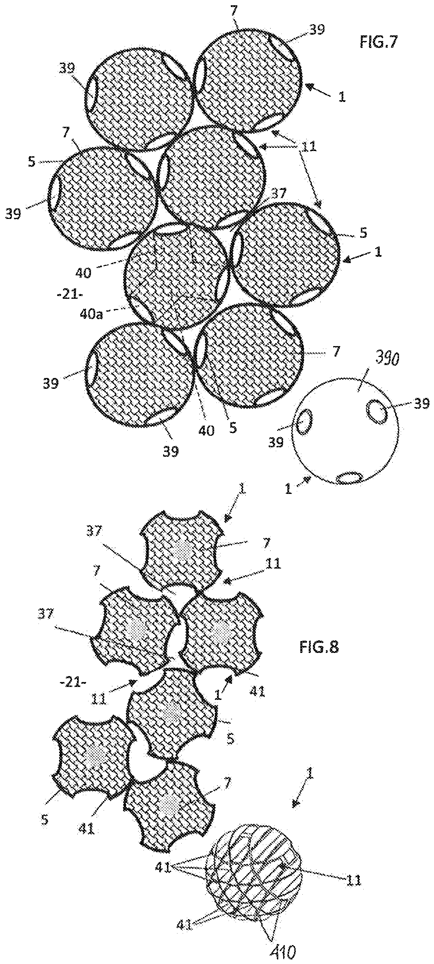

Le même commentaire peut s'appliquer aux deuxième et troisième exemples des figures 7,8 où, respectivement, la structure 11 de positionnement se présente :
- comme des creux 39 formés dans ledit corps 5,
- et comme une structure alvéolaire 41 entourant le corps central 5, à son contact.

On retrouvera les espaces libres 37 entre les dispositifs 1 placés dans l'intérieur creux 21, chacun ayant ici une forme générale sphérique.

Les creux 39 formeront des cavités borgnes, par exemple chacune en portion de sphère.

Dans les deux cas, le corps central 5 s'étendra au fond desdits creux et alvéoles, voire entre eux.

La structure alvéolaire 41 sera aussi ouverte sur l'extérieur.

Pour la réalisation de l'une quelconque de ces structures, on pourra préférer utiliser un moulage monobloc entre la structure de positionnement 11 et le corps 5. En référence à ce qui précède, le corps central 5 pourra donc être une matrice poreuse, à pores ouverts, par exemple de type élastomère.

En termes de coefficient d'échange thermique à diamètre comparable, la solution de la figure 8 est la plus performante, puis celle de la figure 7, puis celle de la figure 6.

A noter que la figure 7 schématise aussi en pointillés une alternative aux creux 39, à savoir des orifices 40 traversant totalement le corps 5, les lèvres 40a de ces orifices qui débouchent sur l'extérieur (et qui s'étendent autour du corps central, localement) ayant peu de risque d'être bouchées par une partie de paroi pleine d'un autre dispositif 1, ici sphérique. Les orifices 40 définiront les passages précités où passe le fluide environnant.

Dans le cas de la figure 6, ce sont les bourrelets circonférentiels 35 disposés suivant différents plans qui assurent l'écartement multidirectionnel du corps 5. Dans les exemples des figures 7,8, la paroi 390, ici sphérique, entre les creux 39, et les parois 410 qui limitent et séparent les alvéoles 41 jouent respectivement ce rôle.

## Revendications

1. Ensemble de gestion thermique comprenant :
- un bottier (23) présentant un intérieur creux (3,21), une entrée et une sortie pour un fluide (9), et, disposés dans ledit intérieur creux (3,21) :
- plusieurs dispositifs (1) d'échange thermique et de positionnement, chacun comprenant :
- un corps central (5) contenant un matériau (7) de stockage d'énergie thermique par accumulation de chaleur latente, à placer en échange thermique avec le fluide (9), et
-- une structure (11) de positionnement du corps central dans ledit intérieur creux (21), la structure de positionnement étant liée au corps central autour duquel elle s'étend et réservant des passages (13) permettant un contact entre le corps central (5) et le fluide (9) environnant et la circulation dudit fluide
**caractérisé en ce que** :
- la structure (11) de positionnement comprend une structure extérieure (17) définissant un cylindre (17) et liée par des bras (19) transversaux au corps central (5), ou
- la structure (11) de positionnement comprend une structure extérieure (170) définissant un anneau et liée par des bras (19) transversaux au corps central (5), ou
- la structure (11) de positionnement se présente comme une structure périphérique (270,35) s'étendant circonférentiellement autour du corps central, dans plusieurs plans, pour l'écarter d'un appui environnant dans plusieurs directions, ou
- la structure (11) de positionnement comprend une structure extérieure (270) :
-- définissant une sphère discontinue (13).
-- et liée au corps central (5) par des bras (190) transversaux autour du corps central (5), ou
- la structure (11) de positionnement se présente comme une structure alvéolaire (41) entourant le corps central (5), à son contact, ou
- la structure (11) de positionnement se présente comme un ou plusieurs bourrelets (35) linéaires entourant le corps central (5), à son contact, ou comme des creux (39) formés dans ledit corps

2. Ensemble selon la revendication 1 où le matériau (7) de stockage d'énergie thermique du corps central (5) comprend au moins un MCP.

3. Ensemble selon l'une quelconque des revendications précédentes, qui est un moulage monobloc entre la structure (11) de positionnement et le corps central (5) qui contient le matériau (7) de stockage d'énergie thermique.

4. Ensemble selon l'une quelconque des revendications précédentes, où plusieurs dits dispositifs (1) sont liés ensemble en chapelet par un lien souple (27).

5. Ensemble selon l'une quelconque des revendications précédentes, où deux dits dispositifs (1) adjacents dans ledit intérieur creux (3,21) sont au contact l'un de l'autre.

## Patentansprüche

1. Wärmemanagement-Anordnung, enthaltend:
- ein Gehäuse (23) mit einem hohlen Innenraum (3, 21), einem Einlass und einem Auslass für ein Fluid (9), und, in dem hohlen Innenraum (3, 21) angeordnet:
- mehrere Wärmeaustausch- und Positioniervorrichtungen (1), die jeweils enthalten:
-- einen zentralen Körper (5), der ein Material (7) zur Speicherung von Wärmeenergie durch Latentwärmeakkumulation enthält, das in Wärmeaustausch mit dem Fluid (9) zu bringen ist, und
-- eine Struktur (11) zum Positionieren des zentralen Körpers in dem hohlen Innenraum (21), wobei die Positionierungsstruktur mit dem zentralen Körper, um den sie sich erstreckt, verbunden ist und Durchgänge (13) freilässt, die einen Kontakt zwischen dem zentralen Körper (5) und dem umgebenden Fluid (9) und die Zirkulation des Fluids ermöglichen,
**dadurch gekennzeichnet, dass**
- die Positionierungsstruktur (11) eine äußere Struktur (17) aufweist, die einen Zylinder (17) definiert und über Querarme (19) mit dem zentralen Körper (5) verbunden ist, oder
- die Positionierungsstruktur (11) eine äußere Struktur (170) aufweist, die einen Ring definiert und über Querarme (19) mit dem zentralen Körper (5) verbunden ist, oder
- die Positionierungsstruktur (11) in Form einer Umfangsstruktur (270, 35) vorliegt, die sich in mehreren Ebenen in Umfangsrichtung um den zentralen Körper herum erstreckt, um ihn von einer in mehreren Richtungen umgebenden Abstützung zu beabstanden, oder
- die Positionierungsstruktur (11) eine äußere Struktur (270) aufweist, die
-- eine nicht kontinuierliche Kugel (13) definiert,
-- und mit dem zentralen Körper (5) über Querarme (190) um den zentralen Körper (5) herum verbunden ist, oder
- die Positionierungsstruktur (11) in Form einer Wabenstruktur (41) vorliegt, die den zentralen Körper (5) umgibt und mit diesem in Kontakt steht, oder
- die Positionierungsstruktur (11) in Form einer oder mehrerer linearer Wülste (35), die den zentralen Körper (5) umgeben und mit diesem in Kontakt stehen, oder in Form von Vertiefungen (39), die in dem genannten Körper ausgebildet sind, vorliegt.

2. Anordnung nach Anspruch 1,
wobei das Wärmeenergie-Speichermaterial (7) des zentralen Körpers (5) zumindest ein PCM enthält.

3. Anordnung nach einem der vorstehenden Ansprüche, die ein einteiliger Formkörper zwischen der Positionierungsstruktur (11) und dem zentralen Körper (5) ist, welcher das Wärmeenergie-Speichermaterial (7) enthält.

4. Anordnung nach einem der vorstehenden Ansprüche,
wobei mehrere der genannten Vorrichtungen (1) durch eine nachgiebige Verbindung (27) zu einem Kranz miteinander verbunden sind.

5. Anordnung nach einem der vorstehenden Ansprüche,
wobei zwei aneinandergrenzende Vorrichtungen (1) in dem hohlen Innenraum (3, 21) miteinander in Kontakt stehen.

## Claims

1. A thermal management system including:
- a housing (23) having a hollow interior (3, 21), an inlet and an outlet for a fluid (9), and, disposed in said hollow interior (3, 21):
- a plurality of heat exchange and positioning devices (1), each comprising:
-- a central body (5) containing a material (7) for storing thermal energy by latent heat accumulation, to be placed in thermal exchange with the fluid (9), and
-- a structure (11) for positioning the central body in said hollow interior (21), the positioning structure being connected to the central body around which it extends and reserving passages (13) enabling contact between the central body (5) and the surrounding fluid (9) and a circulation of said fluid,
**characterized in that**:
- the positioning structure (11) comprises an external structure (17) defining a cylinder (17) and connected by transverse arms (19) to the central body (5), or
- the positioning structure (11) comprises an external structure (170) defining a ring and connected by transverse arms (19) to the central body (5), or
- the positioning structure (11) includes a peripheral structure (270, 35) extending circumferentially around the central body, in several planes, to separate it from a surrounding support in several directions, or
- the positioning structure (11) comprises an external structure (270):
-- defining a discontinuous sphere (13),
-- and connected to the central body (5) by transverse arms (190) around the central body (5), or
- the positioning structure (11) includes a cellular structure (41) surrounding the central body (5), in contact with it, or
- the positioning structure (11) includes one or more linear beads (35) surrounding the central body (5), in contact with it, or recesses (39) formed in said body.

2. A system according to claim 1, wherein the thermal energy storage material (7) of the central body (5) comprises at least one PCM.

3. A system according to any one of the preceding claims, which is a one-piece casting between the positioning structure (11) and the central body (5) which contains the thermal energy storage material (7).

4. A system according to any one of the preceding claims, wherein several of said devices (1) are connected together in a string by a flexible link (27).

5. A system according to any one of the preceding claims, wherein two said adjacent devices (1) in said hollow interior (3, 21) are in contact with each other.
